(19) Europäisches Patentamt
European Patent Office
Office européen des brevets

(11) Veröffentlichungsnummer: **0 053 740**
**B1**

(12) # EUROPÄISCHE PATENTSCHRIFT

(45) Veröffentlichungstag der Patentschrift: **12.10.83**

(51) Int. Cl.³: **C 09 D 3/80**, C 08 L 33/06, C 08 L 55/04, C 08 L 25/14

(21) Anmeldenummer: **81109727.8**

(22) Anmeldetag: **17.11.81**

(54) **Luftvernetzende Polyacrylatüberzugsmittel.**

(30) Priorität: **27.11.80 DE 3044695**

(43) Veröffentlichungstag der Anmeldung: **16.06.82 Patentblatt 82/24**

(45) Bekanntmachung des Hinweises auf die Patenterteilung: **12.10.83 Patentblatt 83/41**

(84) Benannte Vertragsstaaten: **AT DE FR GB IT NL SE**

(56) Entgegenhaltungen: **CHEMICAL ABSTRACTS, Band 90, Nr. 6, 5. Februar 1979, Seite 74, Nr. 40304s Columbus, Ohio, U.S.A.**

(73) Patentinhaber: **BAYER AG, Zentralbereich Patente, Marken und Lizenzen, D-5090 Leverkusen 1, Bayerwerk (DE)**

(72) Erfinder: **Dhein, Rolf, Dr., Deswatinesstrasse 30, D-4150 Krefeld (DE)**
Erfinder: **Fleiter, Lothar, Dr., Bärenstrasse 7, D-4150 Krefeld (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 053 740 B1

ACTORUM AG

# Luftvernetzende Polyacrylatüberzugsmittel

Die Erfindung betrifft luftvernetzende Polyacrylatüberzugsmittel, die neben dem Polyacrylatbindemittel, das Anteile konjugiert ungesättigter Fettsäuren und gegebenenfalls Carbonsäurehalbestergruppen einkondensiert enthält, übliche Lackhilfsmittel und zusätzlich β-Dicarbonylverbindungen enthalten.

Polyacrylaten wird auch im Bereich der bei Raumtemperatur trocknenden Lacke als Bindemittel eine hohe Bedeutung eingeräumt. Üblicherweise handelt es sich bei diesen Bindemitteln um Lackrohstoffe, die nicht durch chemische Vernetzung klebfrei werden, sondern lediglich durch die Verdunstung der Lösungsmittel einen klebfreien und widerstandsfähigen Überzug ausbilden. Um auch diese Systeme widerstandsfähiger gegen Ausseneinflüsse zu machen, hat es nicht an Bemühungen gefehlt, auch die bei Raumtemperatur trocknenden Polyacrylate chemisch zu vernetzen.

So ist es bekannt, Copolymerisate aus Glycidyl (meth)-acrylat und Vinyl- oder Vinylidenmonomeren mit trocknenden Fettsäuren umszusetzen und als lufttrocknende Lackbindemittel einzusetzen. Unter Vinyl- bzw. Vinyliden-monomeren werden Vinyltoluol, (Meth)Acrylnitril und (Meth) Acrylsäureester verstanden (vgl. GB-PS 793 776).

Ferner werden gemäss DE-PS 1 720 697 = GB-PS 1 227 398 Copolymerisate aus mindestens einem Vinylmonomeren wie Styrol und (Meth)Acrylsäureester und mindestens einem Epoxidgruppen enthaltenden Comonomeren hergestellt, mit trocknenden Fettsäuren verestert, und die bei der Veresterung gebildeten Hydroxylgruppen mit einem Dicarbonsäureanhydrid zu Halbestergruppierungen umgesetzt, wobei zur Erzielung hoher Pigmentbenetzung Säurezahlen zwischen etwa 20 und etwa 60, bezogen auf das Bindemittel, erforderlich sind.

Besonders günstige lacktechnische Eigenschaften werden erzielt, wenn die luftvernetzenden Lackbindemittel von Copolymerisaten aus copolymerisierten Einheiten von

20–55 Gew.-% Styrol
5–45 Gew.-% Glycidyl(meth)acrylat, und
0–50 Gew.-% mindestens einem (Meth)Acrylsäureester mit 1–10 C-Atomen in der Alkoholkomponente,

die mit 22 bis 50 Gew.-% trocknenden Fettsäuren, bezogen auf Copolymerisat und trocknende Fettsäuren und Dicarbonsäureanhydrid, bis zur Säurezahl < 10 verestert, und die dabei gebildeten Hydroxylgruppen anschliessend mit Dicarbonsäureanhydrid umgesetzt worden sind, wobei als trocknende Fettsäuren, bezogen auf Copolymerisat und trocknende Fettsäuren und Dicarbonsäureanhydrid,

0–15 Gew.-% natürliche, trocknenden Fettsäuren und
10–50 Gew.-% isomerisierte, trocknende Fettsäuren,

die Summe der Prozentgehalte muss 22–50 Gew.-% betragen, eingesetzt werden und wobei 30 bis 75 Gew.-% der isomerisierten, trocknenden Fettsäuren konjugierte Doppelbindungen enthalten, und die Dicarbonsäureanhydride aus 0,5 bis 3 Gew.-%, bezogen auf Gesamtkomponenten des Bindemittels, Tetrahydrophthalsäureanhydrid oder dessen Isomeren oder Mischungen dieser Anhydride bestehen (vgl. DE-OS 26 47 314 = US-PS 4 129 537).

Auch luftvernetzende Lackbindemittel von Copolymerisaten aus copolymerisierten Einheiten von

5–40 Gew.-% Styrol,
10–50 Gew.-% mindestens eines Hydroxylalkyl(meth)-acrylats mit 2–4 C-Atomen in der Alkylgruppe, und
10–50 Gew.-% mindestens eines (Meth)Acrylsäureesters mit 1–10 C-Atomen in der Alkoholkomponente, verestert mit
10–50 Gew.-% bezogen auf Copolymerisat und trocknende Fettsäuren und Dicarbonsäureanhydrid, an trocknenden Fettsäuren,

wobei 10 bis 70 Mol-% der Hydroxylgruppen der eingebauten Hydroxyalkyl(meth)acrylateinheiten mit trocknenden Fettsäuren verestert und anschliessend 0,5 bis 20 Mol-% der Hydroxylgruppen der eingebauten Hydroxyalkyl(meth)acrylateinheiten mit 0,5 bis 10 Gew.-%, bezogen auf Lackbindemittel, mindestens eines cyclischen Dicarbonsäureanhydrids zum Halbester der entsprechenden Dicarbonsäure mit einer Gesamtsäurezahl von 5 bis 30 umgesetzt werden und wobei die Gesamtsäurezahl sich zusammensetzt aus einer Säurezahl von 1 bis 10, bestimmt nach der Veresterung mit den trocknenden Fettsäuren und herrührend von freien Fettsäuren, und einer Säurezahl von 1 bis 29, bestimmt am lösungsmittelfreien Lackbindemittel (Endprodukt) und herrührend von der Halbesterbildung gehören zu diesem Stande der Technik (vgl. DE-OS 2 728 568 = US-PS 4 186 116).

Die Bindemittel des Standes der Technik haben jedoch noch Nachteile, die ihren Einsatz bei bestimmten Anwendungen, z.B. in der Automobil-Reparaturlackierung, erschweren. Da Automobil-Reparaturlackierungen häufig unter räumlich schwierigen Bedingungen ausgeführt werden müssen, stellt sich häufig nach Trocknung der Reparaturlackierung heraus, dass durch mechanischen Einfluss oder durch Verunreinigung in der Umgebungsluft die Lackoberfläche Fehler aufweist. Diese Fehlstellen werden dann meistens dadurch behoben, dass sie und ihre Umgebung mit dem gleichen Lack nochmals lackiert werden. Der Fachausdruck für diese Arbeitsweise ist Überlackierung.

Leider ist Überlackieren von luftgetrockneten Polyacrylaten der abgehandelten Art in bestimmten Phasen des Lacktrocknungsvorganges nicht möglich, wie aus dem experimentellen Teil dieser Anmeldung hervorgeht. Der überlackierte Film trocknet nicht riss- und ansatzfrei auf. Es kann ein Hockziehen des überlackierten Films erfolgen oder tritt Erweichung ein oder ergeben sich andere Filmunregelmässigkeiten wie unruhige Oberfläche, verminderter Glanz und Mattstellen. Obwohl wie aus den Vergleichsversuchen 1 und 2 dieser Anmeldung hervorgeht, Filme der lufttrocknenden Polyacrylate bereits nach 20 Minuten staubtrocknen und nach 1,5 Stunden klebfrei sind, kann ein Überlackieren dieser Filme ohne sichtbare Schädigung der Lackoberfläche erst nach 48 Stunden erfolgen. Eine derart lange Wartezeit bis zum möglichen Überlackieren des luftvernetzten Polyacrylatfilms ist unwirtschaftlich und nicht tragbar.

Aufgabe der vorliegenden Erfindung ist es daher, luftvernetzende Polyacrylatüberzugsmittel bereitzustellen, die die bekannten verzüglichen lacktechnischen Eigenschaften dieser Überzugsmittelklasse besitzen und darüber hinaus wesentlich besser überlackierbar sind.

Die Aufgabe wurde dadurch gelöst, dass man die bekannten luftvernetzenden Polyacrylatüberzugsmittel, die als Bindemittel Umsetzungsprodukte von Copolymerisaten aus copolymerisierten Einheiten von 1,2-Epoxidgruppen oder Hydroxylgruppen enthaltenden (Meth)Acrylsäureestern und anderen Vinyl- oder Vinylidenmonomeren mit trocknenden Fettsäuren und gegebenenfalls cyclischen Dicarbonsäureanhydriden zwecks Carbonsäurehalbesterbildung enthalten, zusätzlich mit geringen Mengen mindestens einer β-Dicarbonylverbindung abmischt.

Gegenstand der Erfindung ist somit ein luftvernetzendes, pigmentiertes oder pigmentfreies Überzugsmittel aus üblichen Lackhilfsmitteln und einem luftvernetzenden Bindemittel, das durch Umsetzung eines Copolymerisats aus copolymerisierten Einheiten von mindestens einem mindestens eine 1,2-Epoxidgruppe oder Hydroxylgruppe tragenden Ester einer α, β-monoolefinisch ungesättigten $C_3$-$C_5$-Carbonsäure und mindestens einem davon verschiedenen Vinyl- oder Vinylidenmonomeren mit mindestens einer trocknenden Fettsäure und daran anschliessend gegebenenfalls mit mindestens einem cyclischen Dicarbonsäureanhydrid zum Dicarbonsäurehalbester umgesetzt worden ist, dadurch gekennzeichnet, dass das Überzugsmittel als zusätzliches Lackhilfsmittel 0,2 bis 2 Gew.-%, bezogen auf luftvernetzendes Bindemittel, mindestens einer β-Dicarbonylverbindung enthält.

Die vorstehend erwähnten lufttrocknenden Bindemittel sind bekannt, beispielsweise aus GB-PS 767 476, GB-PS 793 776, DE-PS 1 720 697 (= GB-PS 1 227 398) DE-OS 2 647 314 (= US-PS 4 129 537), DE-OS 2 706 106 (= US-PS 4 146 519), DE-OS 2 247 146 (= GB-PS 1 399 159), DE-OS 2 728 568 (= US-PS 4 186 116), DE-OS P 29 34 950.6.

Mindestens eine 1,2-Epoxidgruppe aufweisende Ester einer α, β-monoolefinisch ungesättigten $C_3$-$C_5$-Carbonsäure sind beispielsweise Glycidylacrylat, Glycidylmethacrylat, Fumarsäurebisglycidylester, Maleinsäurebisglycidylester, vorzugsweise Glycidyl(meth)acrylat.

Als mindestens eine Hydroxylgruppe aufweisende Ester einer α, β-monoolefinisch ungesättigten $C_3$-$C_5$-Carbonsäure seien namentlich genannt: Hydroxyalkyl(meth)acrylate mit 2-4 C-Atomen in der Alkylgruppe, z.B. 2-Hydroxyethyl(meth)-acrylat, 2-Hydroxypropyl(meth)acrylat, 4-Hydroxybutyl(meth)acrylat; Trimethylolpropanmono-(meth)-acrylat, Pentaerythritmono(meth)-acrylat oder deren Mischungen; bevorzugt werden Hydroxyalkyl(meth)acrylat mit 2-4 C-Atomen in der Alkylgruppe.

Als Vinyl-bezw. Vinylidenmonomere seien beispielsweise genannt:

Styrol, α-Methylstyrol, o- bzw. p-Chlorstyrol, o-, m- oder p-Methylstyrol, p-tert.-Butylstyrol und gegebenenfalls Mischungen derselben, Acryl- und Methacrylsäurealkylester mit 1 bis 10 C-Atomen in der Alkoholkomponente, beispielsweise Ethylacrylat, Methylacrylat, n- bzw. iso-Propylacrylat, n-Butylacrylat, 2-Ethylhexylacrylat, 2-Ethylhexylmethacrylat, Isooctylacrylat, Decylacrylat, tert.-Butylacrylat, Methylmethacrylat, Ethylmethacrylat, n- bzw. iso-Propylmethacrylat, Butylmethacrylate, Isooctylmethacrylat, Decylmethacrylat und gegebenenfalls Mischungen derselben; Diester der Fumarsäure, Itaconsäure, Maleinsäure, mit 4-8 Kohlenstoffatomen in der Alkoholkomponente; Acrylnitril, (Meth)acrylsäureamid, Vinylester von Alkanmonocarbonsäuren mit 2-5 Kohlenstoffatomen wie Vinylacetat oder Vinylpropionat oder Mischungen der vorgenannten Monomeren, N-Methoxymethyl(meth)acrylsäureamid.

Bevorzugte Vinyl- bzw. Vinylidenmonomere sind Styrol und (Meth)Acrylsäurealkylester mit 1-10 C-Atomen in der Alkoholkomponente und deren Mischungen.

Unter trocknenden Fettsäuren werden natürlich trocknende und isomerisierte trocknende Fettsäuren verstanden. Eine Übersicht über diese trocknenden Fettsäuren ist in der DE-OS 2 647 317 (= US-PS 4 129 537) enthalten. Die trocknenden Fettsäuren sind in Mengen von etwa 20-50 Gew.-% Bindemittel einkondensiert enthalten.

Nach der Umsetzung des Epoxidgruppen enthaltenden Copolymerisats mit trocknenden Fettsäuren können die dabei gebildeten Hydroxylgruppen noch ganz oder teilweise mit cyclischen Dicarbonsäureanhydriden in den entsprechenden Halbester überführt werden.

Im Falle von Hydroxylgruppen enthaltenden, jedoch epoxidgruppenfreien Copolymerisaten werden 10 bis 70 Mol-% der Hydroxylgruppen mit trocknenden Fettsäuren verestert und anschliessend 0,5 bis 20 Mol-% der Hydroxylgruppen der eingebauten Hydroxyalkyl(meth)acrylateinheiten mit 0,5 bis 10 Gew.-%, bezogen auf Lackbindemittel, mindestens eines cyclischen Dicarbonsäureanhydrids zum Halbester der entsprechenden Dicarbonsäure mit einer Gesamtsäurezahl von vorzugsweise 5 bis 30 umgesetzt werden und wobei die Gesamtsäurezahl sich zusammensetzt aus einer Säurezahl von 1 bis 10, bestimmt nach der Veresterung mit den trocknenden Fettsäuren und herrührend von freien Fettsäuren, und einer Säurezahl von 1 bis 29, bestimmt am lösungsmittelfreien Lackbindemittel (Endprodukt) und herrührend von der Halbesterbildung.

Geeignete cyclische Dicarbonsäureanhydride sind z.B.:

Bernsteinsäureanhydrid, Maleinsäureanhydrid, Phthalsäureanhydrid, Tetrahydrophthalsäureanhydrid, Hexahydrophthalsäureanhydrid, Methylhexahydrophthalsäureanhydrid, Endomethylentetrahydrophthalsäureanhydrid, halogenierte Phthalsäureanhydride wie Tetrachlorphthalsäureanhydrid, Tetrabromphthalsäureanhydrid; 1, 4, 5, 6, 7, 7-Hexachlorbicyclo(2, 2, 1)-hepten-5-dicarbonsäure-(2, 3)-anhydrid, Diglykolsäureanhydrid. Vorzugsweise wird Tetrahydrophthalsäureanhydrid oder dessen Isomeren oder Mischungen dieser Anhydride verwendet.

Besonders bevorzugt sind luftvernetzende Lackbindemittel gemäss DE-OS 2647317 (= US-PS 4129537), die in den Ausführungen dieser Anmeldung zum Stande der Technik betreffend lufttrocknende Lackbindemittel auf Acrylatbasis abgehandelt wurde.

Erfindungsgemäss einzusetzende β-Dicarbonylverbindungen sind beispielsweise Acetylaceton, Acetessigsäureester, Acetylcyclopentanon, Oxalyl-N-methylpyrrolidon und Acetylbutyrolacton.

Besonders bevorzugt sind Acetyllactone, z.B. α-Acetyl-γ-Butyrolacton

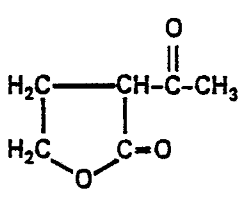

Die β-Dicarbonylverbindungen sind in Mengen von 0,2 bis 2 Gew.-%, vorzugsweise 0,5 bis 1,5 Gew.-%, bezogen auf Bindemittel, im Überzugsmittel enthalten.

Neben dem Bindemittel und den erfindungsgemäss einzusetzenden β-Dicarbonylverbindungen enthalten die beanspruchten Überzugsmittel noch ein oder mehrere der üblichen Lackhilfsmittel in üblichen Mengen.

Übliche Lackhilfsmittel sind beispielsweise:

Lösungsmittel wie Xylol, Solventnaphtha, Aramatengemische Ethylglykolacetat, Lackbenzin, Terpentinöl in Mengen von 1 bis 100 Gew.-%, bezogen auf Bindemittel.

Verlaufsmittel wie Siliconöle, in Mengen von 0,5 bis 5 Gew.-%, bezogen auf Bindemittel.

Siccative wie Kobalt-, Blei-, Mangan-, Calcium-, Zirkon- und/oder Eisenverbindungen in Form ihrer Salze mit z.B. Naphthensäuren, Octansäuren, Decansäuren in Mengen von 0,05 bis 2 Gew.-%, bezogen auf Bindemittel.

Hautverhinderungsmittel wie Aldoxime oder Ketoxime, beispielsweise Butanonoxim, in Mengen von 0,1 bis 2,0 Gew.-%, bezogen auf festes Bindemittel.

Ausser den üblichen Lackhilfsmitteln können die Überzugsmittel noch Pigmente wie Titandioxid, Eisenoxide, Zinkoxide, Chromoxide, Zinksulfid, Chromate wie Zink-, Blei- oder Strontiumchromat, Chromgelb, Lithopone, organische Pigmente wie Phthalocyaninpigmente oder unlösliche Azofarbstoffe in Mengen von 10 bis 100 Gew.-%, bezogen auf Bindemittel, enthalten.

Mit der Angabe «bezogen auf Bindemittel» ist stets lösungsmittelfreies Bindemittel (100%iges) gemeint.

Die erfindungsgemässen Überzugsmittel können zur Variation der Filmeigenschaften auch mit anderen Harzen kombiniert werden.

Die Herstellung der Lackfilme und das Überlackieren kann durch übliche Methoden wie Streichen, Spritzen, Tauchen, Rakeln usw. auf geeignete Unterlagen, z.B. aus Metall, Holz, Papier, Glas, Keramik, Stein, Beton, Kunststoff usw. erfolgen. Die Trocknung erfolgt im allgemeinen bei 15° bis 30°C. Es können jedoch auch niedere oder höhere Trocknungstemperaturen angewandt werden.

Die in den Beispielen angegebenen Prozentgehalte und Teile beziehen sich auf das Gewicht, sofern nicht anders vermerkt.

Beispiel 1

100 Teile eines Copolymerisats, bestehend aus copolymerisierten Einheiten von 43,7 Gew.-% Styrol, 22,6 Gew.-% Methylmethacrylat, 1,8 Gew.-% Butylacrylat und 31,9% Gew.-% Glycidylmethacrylat und hergestellt in Xylol durch übliche Copolymerisation mit Peroctoat und Dodecylmercaptan als Kettenabbrecher bei 110°C werden mit 62,5 Teilen isomerisierten, trocknenden Fettsäuren [Zusammensetzung des isomerisierten, trocknenden Fettsäuregemisches:

16% gesättigten Fettsäuren ($C_8$–$C_{18}$-Fettsäuren: (Capryl-, Laurin-, Myristin-, Palmitin- und Stearinsäure)
25% einfach ungesättigte $C_{18}$-Fettsäure (Ölsäure)
58% zweifach ungesättigte $C_{18}$-Fettsäure, wobei 48–52% der ungesättigten Fettsäuren konjugiert sind (9.11- und 9.12-Linolsäure)
1% dreifach ungesättigte $C_{18}$-Fettsäure (Linolen- und Eläostearinsäure],

bei 135°C bis zur Säurezahl 6,0 mg KOH/g Substanz verestert und anschliessend mit 1,0 Teil Tetrahydrophthalsäureanhydrid bei 120°C verestert, so dass bei vollständiger Reaktion ein Halbester der Säurezahl 8 mg KOH/g Substanz entsteht. Das erhaltene Bindemittel in Xylol hat

einen Gehalt an Copolymerisat von 57%, an isomerisierten trocknenden Fettsäuren von ca. 38% und eine Viskosität nach DIN 53211 von 80–90 (Sekunden) (40%ig in Xylol).

Einem Weisslack, hergestellt aus
175,5 Tle. obiger Bindemittellösung (57%ig in Xylol)
65,5 Tle. Titandioxid (Rutiltype)
75,5 Tle. Xylol
2,5 Tle. Ca-Octoatlösung (in Testbenzin 4% Metallgehalt)
1,7 Tle. Co-Octoatlösung (in Testbenzin 6% Metallgehalt)
1,2 Tle. Verlaufmittel, Siliconöllösung 1% in Xylol
1,5 Tle. Methylethylketoxim ca. 55%ige Lösung in Testbenzin
werden 1,0 Teile α-Acetyl-γ-butyrolacton, bezogen auf Bindemittel zugesetzt. Die Ergebnisse der lacktechnischen Prüfung, insbesondere der Überlackierbarkeit, sind der Tabelle zu entnehmen.

Vor dem Überlackieren, im vorliegenden Fall durch Überspritzen, wird der vorstehende Weisslack mit Xylol auf eine Viskosität von 20″ (gemäss DIN 53211) eingestellt.

Vergleichsversuch 1
Ein Weisslack auf der Grundlage eines Bindemittels gemäss Beispiel 1, jedoch ohne Zusatz von α-Acetyl-γ-butyrolacton. Ergebnisse siehe Tabelle.

Vergleichsversuch 2
Ein Weisslack gemäss Beispiel 1, jedoch mit der doppelten Menge an Cobaltoctoat zur Beschleunigung der Trocknung, jedoch ohne Zusatz von α-Acetyl-γ-butyrolacton. Ergebnisse siehe Tabelle.

Tabelle

| | Trocknungszeit staubtrocken* | klebfrei* | Überspritzbarkeit nach 2h | 4h | 8h | 16h | 24h | 48h |
|---|---|---|---|---|---|---|---|---|
| Beispiel 1 | 20′ | 1,5 h | 4 | 5 | 5 | 0 | 0 | 0 |
| Vergleichsversuch 1 | 20′ | 1,5 h | 4 | 5 | 5 | 4 | 3 | 0 |
| Vergleichsversuch 2 | 20′ | 1,5 h | 4 | 5 | 5 | 4 | 4 | 0 |

* ermittelt durch Berühren des Films mit dem Zeigefinger

Erläuterungen zur Tabelle
Schichtdicke des getrockneten, zu überlackierenden Films: 50 µm, nass mit 400er-Schleifpapier geschliffen. Schichtdicke des getrockneten, durch Überlackierung erhaltenen Films: 50 µm. Substrat: Karosseriebleche.

Die Trocknung erfolgt bei t = 20°C und 60% relativer Luftfeuchte.

Beurteilung der Überspritzbarkeit:

0 = sehr gut, keine sichtbaren Störungen
1 = sehr gut, vorübergehender Schleier
2 = gut, vorübergehende Anquellung
3 = befriedigend, Anquellung, teilweise zurückgehend
4 = mangelhaft, stark angequollen,
5 = mangelhaft, stark angequollen, sehr unregelmässige Oberfläche.

**Patentansprüche**

1. Luftvernetzendes, pigmentiertes oder pigmentfreies Überzugsmittel aus üblichen Lackhilfsmitteln und einem luftvernetzenden Bindemittel, das durch Umsetzung eines Copolymerisats aus copolymerisierten Einheiten von mindestens einem mindestens eine 1,2-Epoxidgruppe oder Hydroxylgruppe tragenden Ester einer α, β-monoolefinisch ungesättigten $C_3$-$C_5$-Carbonsäure und mindestens einem davon verschiedenen Vinyl- oder Vinylidenmonomeren mit mindestens einer trocknenden Fettsäure und daran anschliessend gegebenenfalls mit mindestens einem cyclischen Dicarbonsäureanhydrid zum Dicarbonsäurehalbester umgesetzt worden ist, dadurch gekennzeichnet, dass das Überzugsmittel als zusätzliches Lackhilfsmittel 0,2 bis 2 Gew.-%, bezogen auf luftvernetzendes Bindemittel, mindestens einer β-Dicarbonylverbindung enthält.

2. Luftvernetzendes Überzugsmittel nach Anspruch 1, dadurch gekennzeichnet, dass das luftvernetzende Bindemittel ein Copolymerisat ist aus copolymerisierten Einheiten von
20–55 Gew.-% Styrol,
5–45 Gew.-% Glycidyl(meth)acrylat, und
0–50 Gew.-% mindestens einem (Meth)Acrylsäureester mit 1–10 C-Atomen in der Alkoholkomponente,
das mit 22 bis 50 Gew.-% trocknenden Fettsäuren, bezogen auf Copolymerisat und trocknende Fettsäuren und Dicarbonsäureanhydrid, bis zur Säurezahl 10 verestert, wobei die dabei gebildeten Hydroxylgruppen anschliessend mit Dicarbonsäureanhydrid umgesetzt worden sind und wobei als trocknende Fettsäuren, bezogen auf Copolymerisat und trocknende Fettsäuren und Dicarbonsäureanhydrid,
0–15 Gew.-% natürliche, trocknende Fettsäuren und
10–50 Gew.-% isomerisierte, trocknende Fettsäuren,
die Summe der Prozentgehalte muss 22–50 Gew.-% betragen, eingesetzt worden sind und wobei 30 bis 75 Gew.-% der isomerisierten, trocknenden Fettsäuren konjugierte Doppelbindungen

enthalten, und die Dicarbonsäureanhydride aus 0,5 bis 3 Gew.-%, bezogen auf Gesamtkomponenten des Bindemittels, Tetrahydrophthalsäureanhydrid oder dessen Isomeren oder Mischungen dieser Anhydride bestehen.

3. Luftvernetzendes Überzugsmittel nach den Ansprüchen 1 und 2, dadurch gekennzeichnet, dass die β-Dicarbonylverbindung α-Acetyl- γ-butyrolacton ist.

**Revendications**

1. Produit de revêtement réticulant à l'air, pigmenté ou sans pigment, consistant en agents auxiliaires habituels pour peintures et vernis et un liant réticulant à l'air, que l'on a obtenu par réaction d'un copolymère de motifs copolymérisés d'au moins un ester d'un acide carboxylique insaturé α, β-monoéthylénique en $C_3$-$C_5$, contenant au moins un groupe 1,2-époxyde ou un groupe hydroxyle, et au moins un monomère vinylique ou vinylidénique différent de celui-ci, avec au moins un acide gras siccatif et ensuite éventuellement transformation en semiester d'acide dicarboxylique avec au moins un anhydride d'acide dicarboxylique cyclique, caractérisé en ce que le produit de revêtement contient comme agent auxiliaire supplémentaire pour peintures et vernis 0,2 à 2% en poids, par rapport au liant réticulant à l'air, d'au moins un composé β-dicarbonylé.

2. Produit de revêtement réticulant à l'air selon la revendication 1, caractérisé en ce que le liant réticulant à l'air est un copolymère de motifs copolymérisés de
20–55% en poids de styrène,
5–45% en poids de (méth)acrylate de glycidyle, et
0–50% en poids d'au moins un ester d'acide (méth)acrylique d'un alcool en $C_1$-$C_{10}$,
estérifié jusqu'à l'indice d'acide 10 avec 22–50% en poids d'acides gras siccatifs, par rapport au total copolymère, acides gras siccatifs et anhydride d'acide dicarboxylique, les groupes hydroxyles ainsi formés réagissant ensuite avec un anhydride d'acide dicarboxylique, les acides gras siccatifs utilisés consistant en
0–15% en poids d'acides gras siccatifs naturels,et
10–50% en poids d'acides gras siccatifs isomérisés,
par rapport au total copolymère, acides gras siccatifs et anhydride d'acide dicarboxylique, la somme des pourcentages devant être de 22–50% en poids, et 30 à 75% en poids des acides gras siccatifs isomérisés contenant des doubles liaisons conjuguées; et les anhydrides d'acides dicarboxyliques consistant en 0,5 à 3% en poids d'anhydride d'acide tétrahydrophtalique ou de ses isomères ou de mélanges de ces anhydrides, par rapport au total des composant du liant.

3. Produit de revêtement réticulant à l'air selon les revendications 1 et 2, caractérisé en ce que le composé β-dicarbonylé est l'α-acétyl-γ-butyrolactone.

**Claims**

1. An aerially-cross-linking, pigmented or non-pigmented coating agent consisting of conventional lacquer auxiliaries and an aerially-cross-linking binder which has been reacted to form a dicarboxylic acid semi-ester by the reaction of a copolymer consisting of copolymerised units of at least one ester carrying at least one 1,2-epoxide group or hydroxyl group of an α, β-monoolefinically unsaturated $C_3$-$C_5$-carboxylic acid and at least one vinyl or vinylidene monomer which is different therefrom with at least one drying fatty acid and then optionally with at least one cyclic dicarboxylic acid anhydride, characterised in that the coating agent contains as an additional lacquer auxiliary 0.2 to 2% by weight of at least one α-dicarbonyl compound, based on the aerially-cross-linking binder.

2. An aerially-cross-linking coating agent according to claim 1, characterised in that the aerially-cross-linking binder is a copolymer consisting of copolymerised units of
20–55% by weight of styrene,
5–45% by weight of glycidyl(meth)acrylate, and
0–50% by weight of at least one (meth)acrylate having 1–10 carbon atoms in the alcohol component,
which has been esterified to an acid number of 10 with 22 to 50% by weight of drying fatty acids, based on the copolymer and drying fatty acids and dicarboxylic acid anhydride, wherein the hydroxyl groups formed during this reaction have then been reacted with dicarboxylic acid anhydride and wherein the following have been used as drying fatty acids, based on the copolymer and drying fatty acids and dicarboxylic acid anhydride: 0–15% by weight of natural, drying fatty acids, and 10–50% by weight of isomerised, drying fatty acids, and the total of the percentage contents must be 22–50% by weight, and wherein 30 to 75% by weight of the isomerised, drying fatty acids contain conjugated double bonds, and the dicarboxylic acid anhydrides consist of 0.5 to 3% by weight, based on the total components of the binder, of tetrahydrophthalic acid anhydride or the isomers thereof or mixtures of these anhydrides.

3. An aerially-cross-linking coating agent according to claims 1 and 2, characterised in that the β-dicarbonyl compound is α-acetyl-γ-butyrolactone.